(19)

Europäisches
Patentamt
European
Patent Office
Office européen
des brevets

(11)  **EP 4 783 601 A1**

(12)  # EUROPEAN PATENT APPLICATION
published in accordance with Art. 153(4) EPC

(43) Date of publication:
**29.07.2026   Bulletin 2026/31**

(21) Application number: **24867277.6**

(22) Date of filing: **30.08.2024**

(51) International Patent Classification (IPC):
***H04N 23/67*** (2023.01)

(52) Cooperative Patent Classification (CPC):
**H04N 23/67**

(86) International application number:
**PCT/CN2024/116148**

(87) International publication number:
**WO 2025/060865 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **20.09.2023   CN 202311223779**

(71) Applicants:
• **Lemon Inc.
Grand Cayman, KY1-1205 (KY)**
• **Beijing Zitiao Network Technology Co., Ltd.
Beijing 100190 (CN)**

(72) Inventors:
• **LIU, Sheng
Los Angeles, California 90066 (US)**
• **JIN, Can
Los Angeles, California 90066 (US)**
• **LI, Yongjun
Los Angeles, California 90066 (US)**
• **HAN, Xiao
Los Angeles, California 90066 (US)**
• **LI, Xiaokai
Beijing 100028 (CN)**

(74) Representative: **Grünecker Patent- und
Rechtsanwälte
PartG mbB
Leopoldstraße 4
80802 München (DE)**

(54)  **METHOD AND APPARATUS FOR IMAGING, AND DEVICE AND STORAGE MEDIUM**

(57)    According to embodiments of the present disclosure, there are provided a method, apparatus, device and storage medium for imaging. The method includes determining a target object associated with a gaze of a user from a surrounding environment in which the user is located; determining a target depth of the target object with respect to a camera imaging the surrounding environment based on depth information of the surrounding environment with respect to the camera; and controlling focusing of the camera based on the target depth to image the target object. Thus, it is possible to focus according to the user's gazing requirement, which is advantageous to achieve a larger range of depth of field while satisfying high definition.

FIG. 4

EP 4 783 601 A1

## Description

This application claims priority to Chinese Patent Application No. 2023112237799, filed on Sep. 20, 2023, entitled 'METHOD, APPARATUS, DEVICE AND STORAGE MEDIUM FOR IMAGING', the disclosure of which is incorporated herein by reference in its entirety.

## FIELD

Example embodiments of the present disclosure generally relate to the field of computers, and more particularly, to a method, apparatus, device, and computer-readable storage medium for imaging.

## BACKGROUND

In recent years, technologies such as virtual reality (VR for short), augmented reality (AR for short), and mixed reality (MR for short) have made extensive progress, and have been widely applied in various fields. In some application scenarios of these technologies, it is necessary to capture a real-world image using a camera and present the captured image to a user. The real-world image may be presented to the user together with the computer-generated virtual image. For example, this may be applied in the field of extended reality (XR) including virtual reality, augmented reality, mixed reality, and the like.

## SUMMARY

In a first aspect of the present disclosure, a method for imaging is provided. The method includes: determining a target object associated with a gaze of a user from a surrounding environment in which the user is located; determining a target depth of the target object with respect to a camera imaging the surrounding environment based on depth information of the surrounding environment with respect to the camera; and controlling focusing of the camera based on the target depth to image the target object.

In a second aspect of the present disclosure, a wearable device is provided. The wearable device comprises: a camera configured to image a surrounding environment in which a user is located; a controller configured to: determine a target object associated with a gaze of the user from the surrounding environment; determine a target depth of the target object with respect to the camera based on depth information of the surrounding environment with respect to the camera; and control focusing of the camera based on the target depth to image the target object.

In a third aspect of the present disclosure, there is provided an apparatus for imaging. The apparatus comprises: an object determination module configured to determine a target object associated with a gaze of a user from a surrounding environment in which the user is located; a depth determination module configured to determine a target depth of the target object with respect to a camera imaging the surrounding environment based on depth information of the surrounding environment with respect to the camera; and a focus control module configured to control focusing of the camera based on the target depth to image the target object.

In a fourth aspect of the present disclosure, an electronic device is provided. The electronic device includes: at least one processing unit; and at least one memory coupled to the at least one processing unit and storing instructions for execution by the at least one processing unit that, when executed by the at least one processing unit, cause the electronic device to perform the method of the first aspect.

In a fifth aspect of the present disclosure, a computer readable storage medium is provided, where the computer readable storage medium stores a computer program, and the computer program is executable by a processor to implement the method in the first aspect.

It should be appreciated that what is described in this Summary is not intended to limit critical features or essential features of embodiments of the disclosure, nor is it intended to limit the scope of the disclosure. Other features of the present disclosure will become readily appreciated from the following description.

## BRIEF DESCRIPTION OF THE DRAWINGS

The above and other features, advantages, and aspects of various embodiments of the present disclosure will become more apparent with reference to the following detailed description taken in conjunction with the accompanying drawings. In the drawings, the same or similar reference numerals denote the same or similar elements, wherein:

Figs. 1A and 1B show schematic diagrams of various example environments in which embodiments of the present disclosure can be implemented;
Fig. 2A shows a schematic diagram of the principle between a definition and a depth of field;

Fig. 2B shows a schematic diagram of the principle between a spatial resolution and a focal length;

Fig. 3 illustrates a schematic diagram of an architecture to perform an autofocus function, according to some embodiments of the disclosure;

Fig. 4 shows a flowchart of a process for imaging according to some embodiments of the present disclosure;

Fig. 5A illustrates a schematic diagram of a predetermined plane specified by a camera discrete zoom according to some embodiments of the disclosure;

Fig. 5B illustrates a schematic diagram of a camera discrete zoom within a predetermined plane according to some embodiments of the present disclosure;

Fig. 6A illustrates a schematic diagram of a target plane of a camera continuous zoom according to some embodiments of the present disclosure;

Fig. 6B illustrates a schematic diagram of a camera continuous zoom within a target plane according to some embodiments of the disclosure;

Fig. 7 illustrates a flowchart of a process of initiating a focusing function according to some embodiments of the disclosure;

Fig. 8A illustrates a simulation diagram of a camera not starting an autofocus function according to some embodiments of the disclosure;

Fig. 8B illustrates a simulation of a camera starting the autofocus function according to some embodiments of the disclosure;

Fig. 9 shows a block diagram of an apparatus for imaging according to some embodiments of the present disclosure;

Fig. 10 illustrates a block diagram of a device capable of implementing various embodiments of the present disclosure.

## DETAILED DESCRIPTION

It should be understood that, before the technical solutions disclosed in the embodiments of the present disclosure are used, the user should be informed of the type of the personal information, the usage range, the usage scenario, and the like related to the present disclosure in an appropriate manner and the authorization of the user should be obtained according to relevant legal regulations.

For example, in response to receiving an active request from a user, prompt information is sent to the user to explicitly prompt the user that an operation requested by the user will require acquisition and use of personal information of the user. Thus, the user can autonomously select, according to the prompt information, whether to provide personal information to software or hardware such as an electronic device, an application program, a server, or a storage medium that executes the operations of the technical solutions of the present disclosure.

As an optional but non-limiting implementation, in response to receiving an active request of a user, a manner of sending prompt information to the user may be, for example, a manner of a pop-up window, where the pop-up window may present the prompt information in a text manner. In addition, the popup window may also carry a selection control for the user to select 'agree' or 'don't agree' to provide personal information to the electronic device.

It can be understood that, the above notification and acquisition of the user authorization process are merely exemplary, and do not limit the implementation of the present disclosure, and other methods meeting relevant legal regulations may also be applied to the implementation of the present disclosure.

It is to be understood that the data involved in the technical solution (including but not limited to the data itself, the acquisition or use of the data) should comply with the requirements of the corresponding legal regulations and related provisions.

Embodiments of the present disclosure will be described in more detail below with reference to the accompanying drawings. Although certain embodiments of the present disclosure are shown in the accompanying drawings, it should be understood that the present disclosure may be implemented in various forms and should not be construed as limited to the embodiments set forth herein, but rather, these embodiments are provided for a thorough and complete understanding of the present disclosure. It should be understood that the drawings and embodiments of the present disclosure are only for illustrative purposes and are not intended to limit the scope of the present disclosure.

It should be noted that the headings of any section/subsection provided herein are not limiting. Various embodiments are described throughout herein, and any type of embodiment can be included under any section/subsection. Furthermore, embodiments described in any section/subsection may be combined in any manner with any other embodiments described in the same section/subsection and/or different sections/subsections.

In the description of the embodiments of the present disclosure, the term "including" and the like should be understood as open-ended including, that is, "including but not limited to". The term "based on" should be read as "based at least in part on. " The term "one embodiment" or "the embodiment" should be read as "at least one embodiment". The term "some embodiments" should be understood as "at least some embodiments. " Other explicit and implicit definitions may also be included below. The terms "first", "second", etc. may refer to different or identical objects. Other explicit and implicit definitions may also be included below.

Herein, unless explicitly stated otherwise, "performing a step in response to A" does not mean that the step is performed immediately after "A", but may include one or more intermediate steps.

*Example Environment*

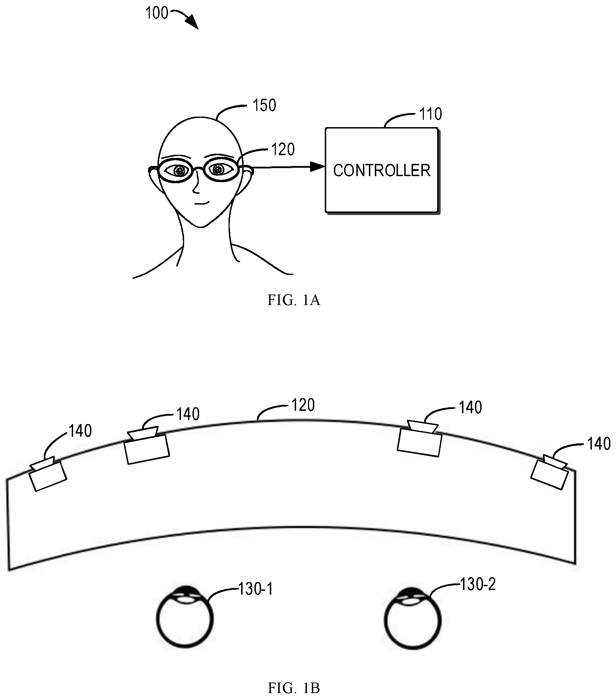

Fig. 1A illustrates a schematic diagram of various example environments 100 in which embodiments of the present disclosure can be implemented. Referring to Fig. 1A, in this example environment 100, a user 150 is wearing an electronic device 120 with a see-through enabled camera 140. The electronic device 120 may capture images for the eye 130-1 and the eye 130-2 (collectively referred to as eyes) of the user 150.

The controller 110 processes an image acquired by the electronic device 120, and outputs gazing point information. In some embodiments, the controller 110 may be a separate device capable of communicating with the electronic device 120, such as a server or a computing node for image or data processing.

In some embodiments, the controller 110 may be integrated with the electronic device 120 or at least coupled to the electronic device 120. For example, the controller 110 may be a module of the electronic device 120 or implemented by a processing unit in the electronic device 120.

Referring to Fig. 1B, the electronic device 120 may include a plurality of cameras 140, i. e., the above-described camera 140 having a see-through function, configured to image the surrounding environment in which the user 150 is located. In some embodiments, the plurality of cameras 140 may be disposed on the electronic device 120 in a direction in which two eyes are connected. The plurality of cameras 140 are usually arranged in front of the electronic device 120 so as to be able to accurately capture the perspective seen by the user 150. Such a camera 140 is located at the center of the top of the device or at an offset side to simulate the position and direction of sight of human eyes. From this position, the camera 140 can record the scene the user 150 is looking at and transmit it to the background processing unit for analysis and application. The plurality of cameras 140 may be arranged on the top or rear of the electronic device 120. The top layout may be used to capture information such as user 150's own activities, hand gestures, or eye movements. The rear layout can be used for recording background or environmental changes, monitoring peripheral conditions, etc. In some embodiments, a plurality of see-through cameras 140 may be used and installed at different positions, and by obtaining images from a plurality of angles at the same time, more accurate and comprehensive visual perception can be achieved.

As an example, four cameras 140 are arranged at positions in front of the left and right eyes, respectively, in order to be able to accurately capture the viewing angle as seen by the user 150, intending to simulate the position and direction of sight of the human eyes. Of course, such an arrangement is not necessary. In some other embodiments, a pair of cameras 140 may be provided in the direction of the eye gaze.

It should be understood that the plurality of cameras 140 are not limited to the arrangement shown in the embodiment in Fig. 1B. The position and/or number of the plurality of cameras 140 may be modified or adjusted as appropriate without departing from the principles of the present disclosure.

In some embodiments, the electronic device 120 may be, for example, a helmet, glasses, or other suitable head-mounted display device (which may also be referred to as a wearable or portable device) for VR, AR, MR, XR.

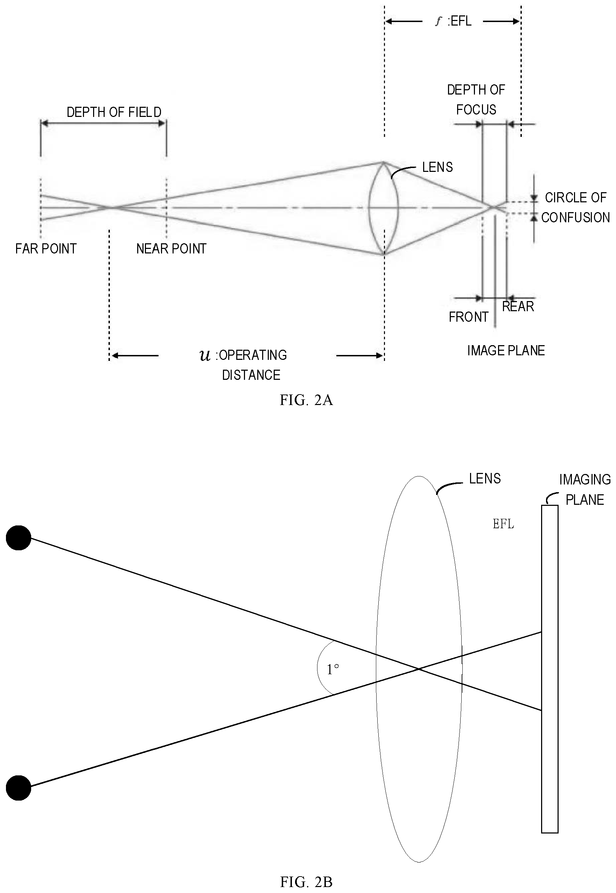

It should be understood that the electronic device 120 described above with reference to Figs. 1A and 1B is merely exemplary and is not intended to limit the scope of the present disclosure. The principle between the definition and the depth of field is described below in conjunction with Fig. 2A, and the principle between the spatial resolution and the focal length is described with reference to Fig. 2B.

Fig. 2A shows a schematic diagram of the principle between the definition and the depth of field, and Fig. 2B shows a schematic diagram of the principle between the spatial resolution and the focal length. With reference to Fig. 2A, a camera may provide a real-time image of a real scene when using a head mounted display device. Thus, the see-through function of the head-mounted display device is key to enable seamless engagement between virtual and real environments for a user. However, obtaining optimal definition in this see-through functionality poses a number of challenges and trade-offs. Current see-through techniques present problems in pursuing coordination between the high definition, the large depth of field, and the low noise. First, the relationship between the definition and the depth of field (DoF) and the signal-to-noise ratio can be analyzed by the following three equations. Equation (1) may calculate the depth of field. Equation (2) may calculate the pixels per degree (PPD) for characterizing the spatial resolution. By combining Equation (1) and Equation (2), Equation (3) may be obtained, and the relationship between the depth of field and the PPD may be obtained, as shown below:

$$DoF = \frac{2Ncuf^2(u-f)}{f^4 - (Nc(u-f))^2} \approx \frac{2u^2Nc}{f^2} \qquad (1)$$

$$PPD_{center} = \frac{f \times \tan 1^\circ}{pixel\ size} \qquad (2)$$

$$DoF = \frac{2u^2 N \times \tan(1^{\circ})^2}{PPD^2{}_{center} \times pixel\ size} \qquad (3)$$

where as shown in Fig. 2A, DoF (depth of field) in Equation (1) represents the depth of field, u represents the operating distance, i. e., the distance from the lens to the target object being gazed. N represents an F number. It can be seen that DoF is inversely proportional to $f^2$ (namely, $\frac{DoF}{f^2}$). c represents a blur circle. f represents a focal length, that is an effective focal length (EFL). Since the operating distance u is obviously greater than the focal length f, $u \approx u - f$. It can be seen from Equation (1) above that the depth of field is inversely proportional to the square of the focal length. Therefore, increasing the magnification of the lens of the camera to improve the definition reduces the depth of field. This means that while objects at a particular distance would remain clear, objects at other distances would become blurred.

As shown in Fig. 2B, the PPD in Equation (2) indicates the number of pixels corresponding to one degree in space. pixel size indicates the pixel size. It can be seen from Equation (2) above that the PPD is inversely proportional to the pixel size. It can be seen from Equation (3) above that the depth of field is inversely proportional to the square of the PPD, and the depth of field is also inversely proportional to the pixel size.

As mentioned above, the see-through function of the head-mounted display device is the key to enable seamless engagement between virtual and real environments for a user. The clarity in the see-through function is crucial to the see-through function of the head mounted display device, directly affecting the user's perception and interaction of virtual and real elements. PPD indicators are commonly used to quantify the level of perceived detail. To obtain high definition, high resolution image sensors with sufficient detail capture capability are required, for example using CMOS sensors. It should be understood that the larger the focal length of the camera of current head mounted displays, the higher the definition (which may also be referred to as accuracy), but inevitably, the depth of field is substantially reduced. This means that even small changes in the distance from the lens can cause defocusing of the object.

For example, in a traditional electronic device, depth of field is greatly reduced while pursuing high definition. The depth of field represents an area in an image that is considered to be capable of receiving a distance within a sharp display range. The depth of field is generally divided into a shallow depth of field and a deep depth of field. Head mounted displays find a balance between pursuing high definition and maintaining adequate depth of field. A larger depth of field is crucial for users to be able to perceive close range (typically about 30 centimeters) and distant (more than 5 meters) objects. A user may be enabled to seamlessly switch between interacting with virtual objects in close proximity and sensing real world elements remotely.

In addition, a camera having a see-through function needs to effectively capture a real-time environment in a short exposure time. To obtain a good signal-to-noise ratio and minimize image noise of the camera, image noise of the camera can be reduced by increasing a pixel size. However, increasing the pixel size would increase the focal length of the lens of the camera, and further reduce the depth of field; therefore, for a camera with a see-through function on a traditional head-mounted display device, finding a balance between needing a high signal-to-noise ratio and a sufficient depth of field also becomes an urgent problem.

In addition, the larger the focal length of a camera of a current head-mounted display device is, the easier the camera is affected by a temperature change, thereby causing a focal point drift. A temperature change may cause lens material of the camera to expand or contract, thereby causing a focal point of the lens to change, and generating a focal point drift problem. As the focal length of the lens of the camera increases to improve definition and PPD, the depth of focus becomes shallower. In this case, as the depth of focus becomes shallow, the camera is more likely to experience focal point fluctuations caused by temperature changes. Generally, as the HMDs are used in various temperature environments, the occurrence of focal point fluctuations is exacerbated.

To this end, embodiments of the present disclosure propose a solution for imaging. According to various embodiments of the present disclosure, a camera and a controller are mounted on a wearable device having a see-through function. In use, a target object in the surrounding environment in which the user is located is determined, and the target object is associated with the user's gaze (e. g., the location and/or size of the target object being gazed by pupil). A target depth of the target object with respect to the camera is determined based on depth information of the surrounding environment with respect to the camera. In addition, the focusing of the camera is controlled based on the target depth so as to image the target object. The target object in the embodiments of the present disclosure may be any type of object in the surrounding environment. For example, an object that the user is currently looking at, an object that the user is predicted to look at, or an object that the user is expected to look at (for example, an object that the user is expected to look at somewhere, or a change in the environment is expected to be noticed by the user according to an application scenario). The target depth may be represented as a relative distance between the target object and the camera (e. g., lens).

In the embodiments of the present disclosure, by using an autofocusing technology, a challenge faced by a see-through technology in a wearable device can be overcome, and a better see-through experience is provided for a user. In various application fields (such as games, education, and medicine), the greatest potential is achieved, and unprecedented sense of immersion and comfort are brought to users. In traditional mixed reality head mounted display devices, there is a trade-off between the definition and the depth of field. However, in the embodiments of the present disclosure, by introducing the autofocus technology, this problem can be alleviated, and a sharp see-through experience and a depth of field within a larger range (a near-distance and a distant scene) can be achieved. The autofocus technology allows a larger pixel size to be used to improve the signal-to-noise ratio and obtain better image quality. Additionally, the see-through cameras used in current mixed reality head mounted display devices all employ fixed aperture technology. However, the electronic device in the embodiments of the present disclosure can enable a dynamic aperture size adjustment function by introducing an autofocusing function, thereby enhancing the capability of capturing photographs and videos. Thus, the user can select different depths of field according to requirements of different applications. In addition, in an environment with powerful light, the autofocus technology can better adapt to environmental conditions.

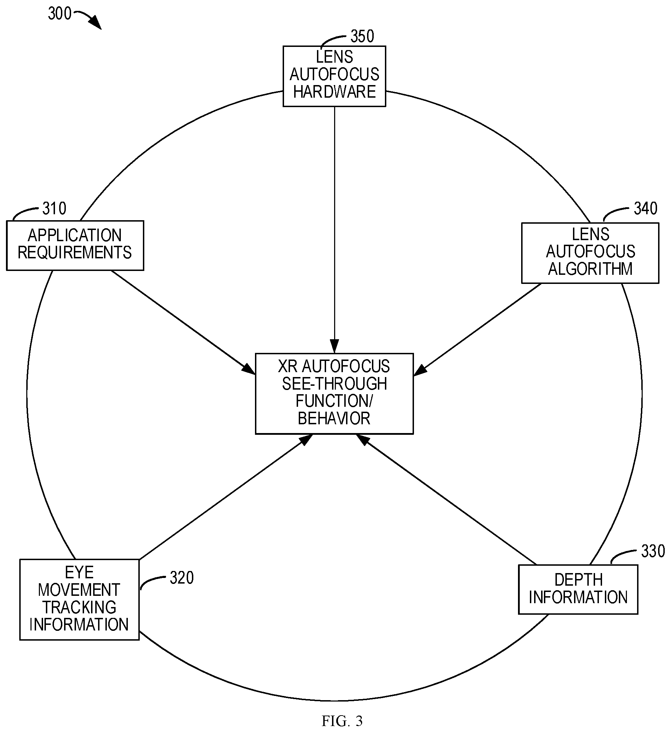

Some example embodiments are described below with continued reference to Figs. 3-10.

### *Example Architecture*

Fig. 3 shows a schematic diagram of an architecture 300 for performing an autofocus function according to some embodiments of the present disclosure. The example architecture 300 can be implemented at the electronic device 120. The example architecture 300 is described below with reference to Figs. 1A and 1B.

As shown in Fig. 3, as described above, in order to solve the problem of coordination among the definition, depth of field and signal-to-noise ratio, and the problem of focal point drift in a conventional mixed reality head-mounted display device. In embodiments of the present disclosure, a camera 140 that may implement XR autofocus see-through functionalities/behaviors are employed in the electronic device 120 to achieve the described problems of coordination between definition, depth of field, and signal-to-noise ratio. To implement the XR autofocus see-through function/behavior, the architecture 300 may include application requirements 310, eye movement tracking information 320, depth information 330, a lens autofocus algorithm 340, and lens autofocus hardware 350.

In some embodiments, the eye tracking information 320 may be acquired when the electronic device 120 needs to acquire a point of gaze of the eyes of the user 150, or where the user 150 is expected to gaze, according to the application requirements 310. Meanwhile, depth information 330 of the point of regard may be acquired, and at this time, the camera 140 implements autofocusing by the lens autofocus hardware 350 in response to the depth information 330. The autofocus process of the lens autofocus hardware 350 is performed by the lens autofocus algorithm 340.

In some embodiments, the lens autofocus hardware 350 may utilize different autofocusing techniques to enable autofocusing. Autofocus may include, but is not limited to, a Voice Coil Motor (VCM), a stepping motor, an Ultra Sonic Motor (USIM), a linear motor, a piezoelectric motor, a liquid lens, an electromagnetic coil, a shape memory alloy (SMA) and hybrid technology (e. g., a poLight lens incorporating piezoelectric actuators, deformable membranes, optical grade soft materials).

In some embodiments, the lens autofocus algorithm 340 also plays a key role. algorithms in embodiments of the present disclosure include, but are not limited to, Contrast Detection Autofocus (CDAF), Phase Detection Autofocus (PDAF), Laser (Time of Flight) autofocus, and depth map based autofocus.

In some embodiments, the depth information 330 may be depth information or 3D mapping data of an environment acquired in real time through a 6DoF (6 Degrees of Freedom) camera or depth camera. To ensure robustness of the camera 140, hybrid autofocus combined with multiple algorithms may need to be employed in some cases.

In addition, the depth information 330 and the eye tracking information 320 may also be used during implementation to indicate that the camera 140 should focus according to a point of gaze of the user 150, or predict an object that the user 150 is likely to gaze in a few tens of milliseconds in the future, or guide the user 150 to gaze at an object for focusing.

Further, in some embodiments, the data of eye movement tracking information 320 is acquired by eye movement tracking sensors or other sensors (e. g., voice recognition, brain machine interface sensors, nerve detection sensors). These sensor data may be used to predict gaze location such that the camera 140 autofocus moves to a predicted object in advance to achieve lower latency.

Furthermore, to achieve low latency performance of the camera 140, a comprehensive optimization of aspects is required during autofocus. It includes, but is not limited to, optimization of autofocus algorithms 340, improvement of the autofocus hardware 350 technology, optimization of camera 140 image processing, display rendering, and eye tracking prediction and correction, etc. By combining different autofocus techniques and methods and by using depth information and an eyeball tracking signal, an autofocus see-through function can be implemented in the electronic device 120, and low delay performance of the camera 140 is ensured by means of the described multi-aspect optimization.

### *Example Processes*

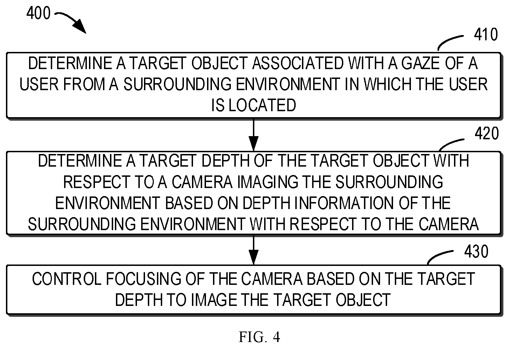

Fig. 4 shows a flowchart of a process 400 for imaging, according to some embodiments of the disclosure. The process 400 may be implemented at an electronic device 120. The process 400 is described below with reference to Figures 1A and 1B.

At block 410, the controller 110 determines a target object associated with a gaze of a user 150 from a surrounding environment in which the user 150 is located. The target object may be of various types. It is to be appreciated that the target object may be any type of object in the surrounding environment.

In some embodiments, the target object may be an object at which the user 150 is currently gazing. The controller 110 determines the object at which the user 150 is currently gazing as the target object based on tracking of the eyes of the user 150. For example, the controller 110 determines the target object according to the data of the eye movement tracking information 320.

Alternatively or additionally, in some embodiments, the target object may be an object that the user 150 is predicted by the controller 110 to be gazing at. The controller 110 may predict the object at which the user 150 is currently gazing as the target object based on the sensor information associated with the user.

Alternatively or additionally, in some embodiments, the target object may be an object that the controller 110 guides the user 150 to gaze at. The controller 110 may determine an object for guiding the user 150 to gaze from the surrounding environment as a target object. For example, according to an application scenario, the user 150 is expected to look somewhere, or a change occurs in the environment, and an object that the user 150 is expected to be noticed will be determined as a target object.

Continuing with the process illustrated in Fig. 4, at block 420, the controller 110 determines a target depth of the target object with respect to a camera 140 imaging the surrounding environment based on depth information of the surrounding environment with respect to the camera 140. It will be appreciated that the target depth may be the relative distance of the target object to the camera 140 (e. g., lens). For example, the controller 110 determines a target depth of the target object with respect to the camera 140 based on the data of the depth information 330.

At block 430, the controller 110 controls focusing of the camera 140 based on the target depth to image the target object. The electronic device 120 using the imaging method can achieve a larger depth of field while satisfying high definition by using an automatic focusing technology.

In some embodiments, the controller 110 may determine a target plane in the surrounding environment that matches the target depth. Accordingly, the controller 110 may control the camera 140 to focus on the target plane to image the target object.

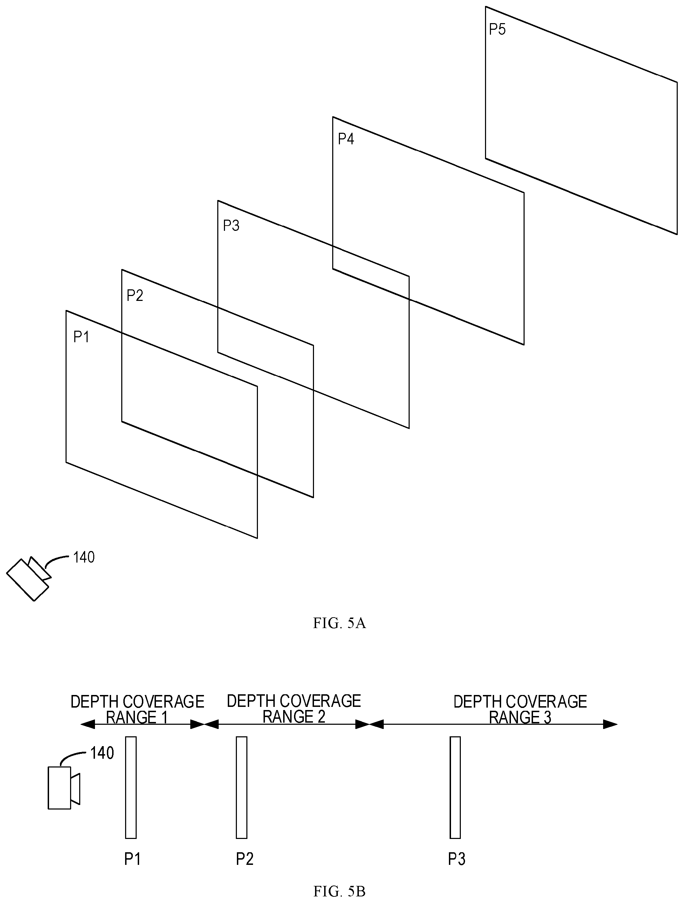

Fig. 5A illustrates a schematic diagram of a predetermined plane specified by a camera discrete zoom according to some embodiments of the disclosure. Fig. 5B illustrates a schematic diagram of a camera discrete zoom within a predetermined plane according to some embodiments of the present disclosure. As shown in Figs. 5A and 5B, the target plane may be determined in a discrete manner, and specifically, a plurality of predetermined depth ranges may exist, which respectively correspond to a plurality of predetermined planes. The controller 110 may determine a predetermined depth range in which the target depth is located from among these predetermined depth ranges. Accordingly, the controller 110 may determine a predetermined plane corresponding to the determined predetermined depth range as the target plane. A target plane in the surrounding environment that matches the target depth is determined in the direction of the target object. An example is described, for example, with reference to Fig. 5A, showing the predetermined planes P1, P2, P3, P4 and P5. In the embodiment of the present disclosure, each of the predetermined planes has a corresponding depth range. For example, the depth range 1 corresponding to the predetermined plane P1 is 1 m to 2 m, the depth range 2 corresponding to the predetermined plane P2 is 2 m to 3 m, the depth range 3 corresponding to the predetermined plane P3 is 3 m to 4 m, the predetermined planes P4 and P5 are deduced by analogy, and no specific limitation is made thereto in the embodiment of the present disclosure. As an example, the predetermined plane P2 may be determined as the target plane if the target depth is within a range of 2 m to 3 m. The number of predetermined planes and depth ranges recited herein are merely exemplary.

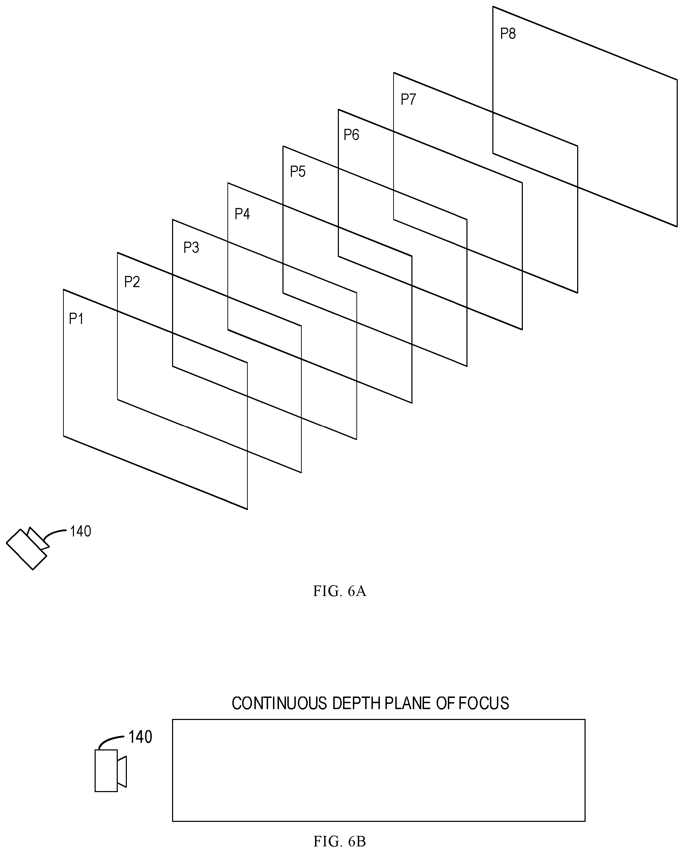

Fig. 6A illustrates a schematic diagram of a target plane of a target plane of a camera continuous zoom according to some embodiments of the present disclosure. Fig. 6B illustrates a schematic diagram of a camera continuous zoom within a target plane according to some embodiments of the disclosure. As shown in Fig. 6A and Fig. 6B, a continuous focusing manner may be used to determine a target plane, and then the controller 100 determines, in the direction of the target object, a target plane that is in the surrounding environment and matches the target depth. For example, an example is described with reference to Fig. 6B, showing some of the successive depth planes, specifically planes PI, P2, P3, P4... and P8. In embodiments of the present disclosure, the planes P1, P2, P3, P4... and P8 have respective continuous depth ranges. Thus, a plane having a target depth can be selected as the target plane without approximation as in a discrete scheme.

In some embodiments, the controller 110 controls the camera 140 to focus on a target plane for imaging. Specifically, the controller 110 determines configuration information for a lens of the camera 140 based on a depth of the target plane relative to the camera 140. The lens is adjusted based on the configuration information of the lens of the camera 140. It should be understood that determining the configuration information of the lens of the camera 140 based on the depth of the target plane with respect to the camera 140 described above is only one example of determining the configuration information, and the scope of the present disclosure is not limited thereto.

In some embodiments, the controller 110 may acquire an ambient temperature at which the lens of the camera 140 is located. The controller 110 may determine temperature compensation information for adjusting the lens based on the ambient temperature and a pre-calibrated temperature-dependent focus feature of the lens. The controller 110 may control focusing of the camera 140 based on the target depth. Further, the controller 110 controls focusing of the camera 140 based on the temperature compensation information and the target depth to image the target object. For example, the controller 110 senses an ambient temperature at which the lens of the camera 140 is located based on data of the temperature sensor.

The present disclosure plays a vital role in compensating for temperature drift by using an autofocus function. The controller 110 enables an autofocus function of the camera 140 to adjust a position of a lens by continuously monitoring a focal point and using a feedback mechanism, so as to maintain accurate focusing in the case of temperature fluctuation. The autofocus function of the camera 140 in the embodiments of the present disclosure can be used to counteract the effect of the lens of the camera 140 on temperature changes, and ensure that the electronic device 120 and other imaging systems running in different temperature environments can stably and clearly focus. For example, an autofocus function of the camera 140 may be implemented by using an autofocus material. Specifically, a lens of the camera 140 may be a poLight lens that has an opposite thermal coefficient (such as a refractive index and a temperature), and is configured to passively compensate for an impact of a temperature change. The lens of camera 140 may also employ active compensation for temperature drift through a temperature sensor connected to the camera module. The autofocusing function of the lens of the camera 140 may also be implemented by means of factory calibration or real-time image processing (for example, contrast detection autofocusing or phase detection autofocusing), which is not specifically limited in the present disclosure.

In some embodiments, the controller 110 controls the camera 140 to focus based on the target depth. In particular, the controller 110 determines whether the camera 140 is activated to provide an image of the surrounding environment to the user 150.

Alternatively or in addition, the controller 110 provides an image of the surrounding environment to the user 150 in response to determining that the camera 140 is activated, and determines whether the autofocus function of the camera 140 is activated. Further, the controller 110 controls the focus of the camera 140 based on the target depth determined above in response to the autofocus function being enabled. This will be described in detail below.

Alternatively or in addition, the controller 110 provides an image of the surrounding environment to the user in response to determining that the camera 140 is not activated. Further, the controller 110 controls the plane in which the camera 140 is focused to be varied within the depth range of the surrounding environment to image or monitor the surrounding environment. This will be described in detail below.

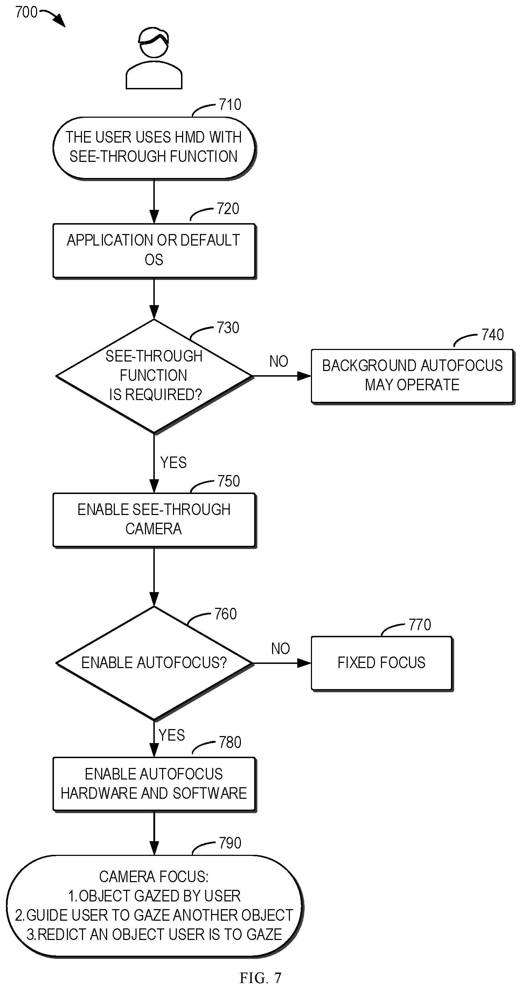

Fig. 7 illustrates a flowchart of a process 700 of initiating a focusing function according to some embodiments of the disclosure. As shown in Fig. 7, at blocks 710 and 720, when the user 150 is using the electronic device 120, the electronic device 120 can disable or enable the see-through functionality of the camera 140 according to different application requirements (which may be a default HMD s operating environment). Therefore, at block 730, it is first required to determine whether to provide an image of the surrounding environment to the user 150 in order to determine whether the camera 140 is enabled.

At block 740, when the see-through capability of the camera 140 is disabled, this means that the user 150 cannot see the real world in real time (e. g., in 100% immersive virtual reality). While the camera 140 does not acquire the real scene, the autofocus function of the camera 140 remains enabled for environment monitoring and video recording. In this case, the autofocus algorithm is different from MR. The camera 140 may scan the entire depth of the environment to obtain a clean image/video in the entire scene.

At block 750, when the see-through function of camera 140 is enabled, that is electronic device 120 enables the MR function (requiring camera 140 to enable the see-through function).

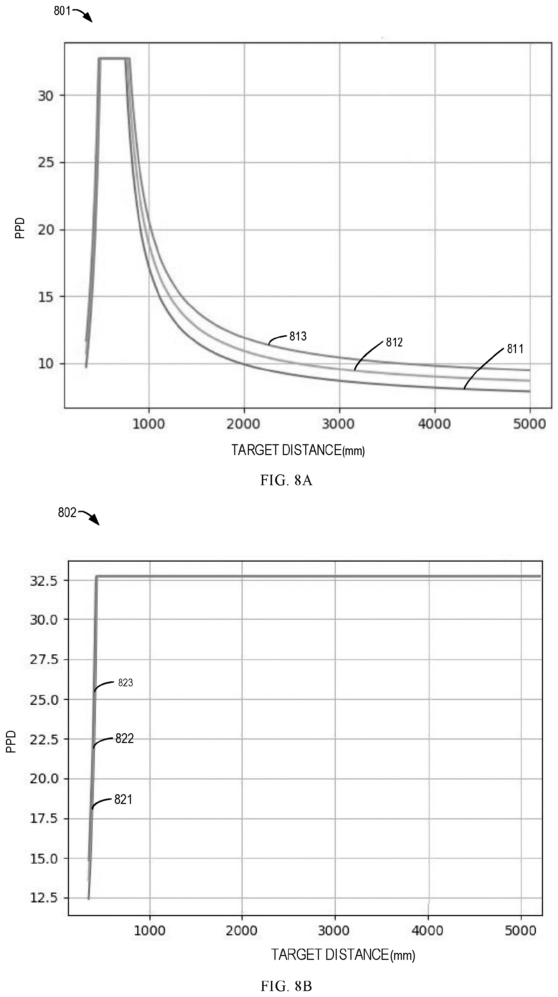

As shown in Fig. 8A, as the target distance increases, the definition gradually decreases. Referring to Fig. 8A, when the target distance approaches 1000 mm, the pixels per degree (PPD) rapidly decreases, i. e., the definition rapidly decreases. The range in which images can be clearly imaged is narrow.

Fig. 8B illustrates a simulation view 802 of a camera-initiated autofocus function, according to some embodiments of the disclosure. As shown in Fig. 8B, when an autofocus function is provided, the camera is in an autofocus state. Curves 821, 822, and 823 show changes in a PDD depending on a target distance. As illustrated in FIG 8B, the definition may be maintained uniform as the target distance increases. Referring to FIG. 8B, for example, when the target distances are 1000 mm, 2000 mm, 3000 mm, and 4000 mm, the pixels per degree (PPD) are the same, that is, the definition is uniform. Compared with Fig. 8A, the range in which clear imaging can be performed is significantly increased.

As described above, the autofocus function of the camera 140 provides other advantages in addition to solving definition and depth of field problems for the electronic device 120 in an embodiment of the present disclosure. For example, it can provide an active temperature drift compensation function to improve the perspective experience and ensure image stability. In addition, the technology can also achieve more efficient display image processing, thereby enabling the user 150 to obtain a smoother and more realistic virtual experience.

## *Example Apparatus and Devices*

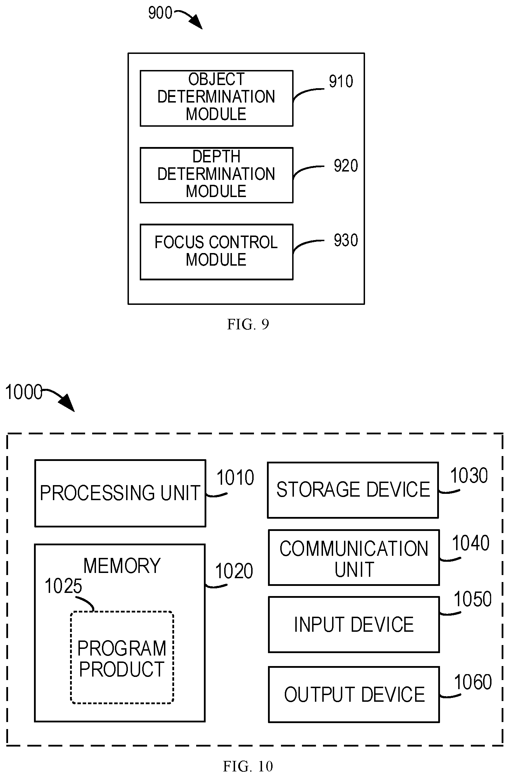

FIG 9 shows a schematic block diagram of an apparatus 900 for imaging, according to certain embodiments of the present disclosure. The apparatus 900 may be implemented as or included in an electronic device 120. The various modules/components in the apparatus 900 may be implemented by hardware, software, firmware, or any combination thereof.

As shown, the apparatus 900 includes an object determination module 910 configured to determine a target object associated with a gaze of a user from a surrounding environment in which the user is located. The apparatus 900 also includes a depth determination module 920 configured to determine a target depth of the target object with respect to a camera imaging the surrounding environment based on depth information of the surrounding environment with respect to the camera. The apparatus 900 also includes a focus control module 930 configured to control focusing of the camera based on the target depth to image the target object.

In some embodiments, the focus control module 930 is configured to determine, in the surrounding environment, a target plane matching the target depth, and control the camera to focus onto the target plane to image the target object.

In some embodiments, the focus control module 930 is configured to determine, as the target plane, a plane in the surrounding environment having the target depth with respect to the camera.

In some embodiments, the focus control module 930 is configured to determine, from a plurality of predetermined depth ranges, a predetermined depth range in which the target depth is located, wherein the plurality of predetermined depth ranges correspond to a plurality of predetermined planes respectively; and determine, as the target plane, a predetermined plane corresponding to the determined predetermined depth range.

In some embodiments, the focus control module 930 is configured to determine determining configuration information for a lens of the camera based on a depth of the target plane with respect to the camera; and adjust the lens based on the configuration information.

In some embodiments, the object determination module 910 is configured to perform at least one of determining, based on tracking of the eyes of the user, an object at which the user is currently gazing as the target object, predicting an object to be gazed at by the user as the target object based on sensing information associated with the user, or determining, from the surrounding environment, an object for directing the gaze of the user as the target object.

In some embodiments, the apparatus 900 further comprises an ambient temperature acquisition module configured to obtain an ambient temperature where a lens of the camera is located; determine temperature compensation information for adjusting the lens based on the ambient temperature and a temperature-dependent focus feature of the lens which is pre-calibrated; controlling focusing of the camera based on the target depth to image the target object comprises: controlling the focusing of the camera based on the temperature compensation information and the target depth.

In some embodiments, the focus control module 930 is configured to determine whether the camera is enabled to provide an image of the surrounding environment to the user; in response to determining that the camera is enabled to provide the image of the surrounding environment to the user, determining whether an autofocus function of the camera is enabled; and in response to the autofocus function being enabled, controlling the focusing of the camera based on the target depth.

In some embodiments, the apparatus 900 further comprises a change control module configured to, in response to determining that the camera is not enabled to provide the image of the surrounding environment to the user, control a plane onto which the camera is focused to vary within a depth range of the surrounding environment to image or monitor the surrounding environment.

Fig. 10 shows a block diagram illustrating an electronic device 1000 in which one or more embodiments of the present disclosure may be implemented. It should be understood that the electronic device 1000 shown in Fig. 10 is merely exemplary and should not constitute any limitation on the functionality and scope of the embodiments described herein. The electronic device 1000 shown in Fig. 10 may be used to implement the electronic device 120 of Fig. 1A.

As shown in Fig. 10, the electronic device 1000 is in the form of a general-purpose electronic device. Components of the electronic device 1000 may include, but are not limited to, one or more processors or processing units 1010, a memory 1020, a storage device 1030, one or more communications units 1040, one or more input devices 1050, and one or more output devices 1060. The processing unit 1010 may be an actual or virtual processor and can perform various processes according to programs stored in the memory 1020. In a multiprocessor system, a plurality of processing units execute computer executable instructions in parallel, so as to improve the parallel processing capability of the electronic device 1000.

Electronic device 1000 typically includes a number of computer storage media. Such media may be any available media that is accessible by electronic device 1000, including, but not limited to, volatile and non-volatile media, removable and non-removable media. The memory 1020 may be volatile memory (e. g., registers, cache, random access memory (RAM)), non-volatile memory (e. g., read-only memory (ROM), electrically erasable programmable read-only memory (EEPROM), flash memory), or some combination thereof. The storage 1030 may be a removable or non-removable medium and may include a machine-readable medium such as a flash drive, a magnetic disk, or any other medium that can be used to store information and/or data and that can be accessed within the electronic device 1000.

The electronic device 1000 may further include additional removable/non-removable, volatile/nonvolatile storage media. Although not shown in Fig. 10, a magnetic disk drive for reading from or writing to a removable, nonvolatile magnetic disk such as a "floppy disk" and an optical disk drive for reading from or writing to a removable, nonvolatile optical disk may be provided. In these cases, each drive may be connected to a bus (not shown) by one or more data media interfaces. Memory 1020 may include a computer program product 1025 having one or more program modules configured to perform various methods or actions of various embodiments of the present disclosure.

The communication unit 1040 implements communication with other electronic devices through a communication medium. In addition, functions of components of the electronic device 1000 may be implemented by a single computing cluster or a plurality of computing machines, and these computing machines can communicate through a communication connection. Thus, the electronic device 1000 may operate in a networked environment using logical connections to one or more other servers, network personal computers (PCs), or another network node.

Input device 1050 may be one or more input devices such as a mouse, keyboard, trackball, etc. Output device 1060 may be one or more output devices such as a display, speakers, printer, etc. The electronic device 1000 may also communicate with one or more external devices (not shown) such as a storage device, a display device, or the like through the communication unit 1040 as required, and communicate with one or more devices that enable a user to interact with the electronic device 1000, or communicate with any device (e. g., a network card, a modem, or the like) that enables the electronic device 1000 to communicate with one or more other electronic devices. Such communication may be performed via an input/output (I/O) interface (not shown).

According to an exemplary implementation of the present disclosure, a computer-readable storage medium is provided, on which a computer-executable instruction is stored, wherein the computer-executable instruction is executed by a processor to implement the above-described method. According to an exemplary implementation of the present disclosure, there is also provided a computer program product, which is tangibly stored on a non-transitory computer-readable medium and includes computer-executable instructions that are executed by a processor to implement the method described above.

Aspects of the present disclosure are described herein with reference to flowchart illustrations and/or block diagrams of methods, apparatus, devices and computer program products implemented according to the present disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processing unit of a general purpose computer, special purpose computer, or other programmable data processing apparatus to produce a machine, such that the instructions, which execute via the processing unit of the computer or other programmable data processing apparatus, create means for implementing the functions/acts specified in the flowchart and/or block diagram block or blocks. These computer-readable program instructions may also be stored in a computer-readable storage medium that can direct a computer, programmable data processing apparatus, and/or other devices to function in a particular manner, such that the computer-readable medium storing the instructions includes an article of manufacture including instructions which implement various aspects of the functions/acts specified in the flowchart and/or block diagram block or blocks.

The computer readable program instructions may be loaded onto a computer, other programmable data processing apparatus, or other devices, causing a series of operational steps to be performed on a computer, other programmable data processing apparatus, or other devices, to produce a computer implemented process such that the instructions which execute on the computer, other programmable data processing apparatus, or other devices implement the functions/acts specified in the flowchart and/or block diagram block or blocks.

The flowchart and block diagrams in the Figures illustrate the architecture, functionality, and operation of possible implementations of systems, methods and computer program products according to various implementations of the present disclosure. In this regard, each block in the flowchart or block diagrams may represent a module, segment, or portion of an instruction which comprises one or more executable instructions for implementing the specified logical function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Having described implementations of the disclosure above, the foregoing description is exemplary, not exhaustive, and is not limited to the implementations disclosed. Many modifications and variations will be apparent to those of ordinary skill in the art without departing from the scope and spirit of the implementations described. The choice of terms used herein is intended to best explain the principles of the implementations, the practical application, or improvements to technologies in the marketplace, or to enable others of ordinary skill in the art to understand the implementations disclosed herein.

**Claims**

1. A method for imaging, comprising:

   determining a target object associated with a gaze of a user from a surrounding environment in which the user is located;
   determining a target depth of the target object with respect to a camera imaging the surrounding environment based on depth information of the surrounding environment with respect to the camera; and
   controlling focusing of the camera based on the target depth to image the target object.

2. The method of claim 1, wherein controlling focusing of the camera based on the target depth to image the target object comprises:

   determining, in the surrounding environment, a target plane matching the target depth; and
   controlling the camera to focus onto the target plane to image the target object.

3. The method of claim 2, wherein determining, in the surrounding environment, a target plane matching the target depth comprises:
   determining, as the target plane, a plane in the surrounding environment having the target depth with respect to the camera.

4. The method of claim 2, wherein determining, in the surrounding environment, a target plane matching the target depth comprises:

   determining, from a plurality of predetermined depth ranges, a predetermined depth range in which the target depth is located, wherein the plurality of predetermined depth ranges correspond to a plurality of predetermined planes respectively; and
   determining, as the target plane, a predetermined plane corresponding to the determined predetermined depth range.

5. The method of claim 2, wherein controlling the camera to focus onto the target plane to image the target object comprises:

   determining configuration information for a lens of the camera based on a depth of the target plane with respect to the camera; and
   adjusting the lens based on the configuration information.

6. The method of claim 1, wherein determining a target object associated with a gaze of a user from a surrounding environment in which the user is located comprises at least one of:

   determining, based on tracking of the eyes of the user, an object at which the user is currently gazing as the target object,
   predicting an object to be gazed at by the user as the target object based on sensing information associated with the user, or
   determining, from the surrounding environment, an object for directing the gaze of the user as the target object.

7. The method of claim 1, further comprising:

   obtaining an ambient temperature where a lens of the camera is located;
   determining temperature compensation information for adjusting the lens based on the ambient temperature and a temperature-dependent focus feature of the lens which is pre-calibrated;
   controlling focusing of the camera based on the target depth to image the target object comprises:
   controlling the focusing of the camera based on the temperature compensation information and the target depth.

8. The method of claim 1, wherein controlling focusing of the camera based on the target depth comprises:

determining whether the camera is enabled to provide an image of the surrounding environment to the user;
in response to determining that the camera is enabled to provide the image of the surrounding environment to the user, determining whether an autofocus function of the camera is enabled; and
in response to the autofocus function being enabled, controlling the focusing of the camera based on the target depth.

9. The method of claim 8, further comprising:
in response to determining that the camera is not enabled to provide the image of the surrounding environment to the user, controlling a plane onto which the camera is focused to vary within a depth range of the surrounding environment to image or monitor the surrounding environment.

10. A wearable device, comprising:

a camera configured to image a surrounding environment in which a user is located;
a controller configured to:

determine a target object associated with a gaze of the user from the surrounding environment;
determine a target depth of the target object with respect to the camera based on depth information of the surrounding environment with respect to the camera; and
control focusing of the camera based on the target depth to image the target object.

11. The wearable device of claim 10, further comprising:

a temperature sensor configured to sense an ambient temperature where a lens of the camera is located,
the controller is further configured to:

determine temperature compensation information for adjusting the lens based on the ambient temperature and a temperature-dependent focus feature of the lens which is pre-calibrated; and
control the focusing of the camera based on the temperature compensation information and the target depth.

12. An apparatus for imaging comprising:

an object determination module configured to determine a target object associated with a gaze of a user from a surrounding environment in which the user is located;
a depth determination module configured to determine a target depth of the target object with respect to a camera imaging the surrounding environment based on depth information of the surrounding environment with respect to the camera; and
a focus control module configured to control focusing of the camera based on the target depth to image the target object.

13. An electronic device, comprising:

at least one processing unit;
at least one memory coupled to the at least one processing unit and storing instructions for execution by the at least one processing unit that, when executed by the at least one processing unit, cause the electronic device to perform a method of any of claims 1 to 9.

14. A computer readable storage medium, on which a computer program is stored, wherein the computer program is executable by a processor to implement a method of any one of claims 1 to 9.

EP 4 783 601 A1

FIG. 1A

FIG. 1B

13

FIG. 2A

FIG. 2B

FIG. 3

400

410

DETERMINE A TARGET OBJECT ASSOCIATED WITH A GAZE OF A USER FROM A SURROUNDING ENVIRONMENT IN WHICH THE USER IS LOCATED

420

DETERMINE A TARGET DEPTH OF THE TARGET OBJECT WITH RESPECT TO A CAMERA IMAGING THE SURROUNDING ENVIRONMENT BASED ON DEPTH INFORMATION OF THE SURROUNDING ENVIRONMENT WITH RESPECT TO THE CAMERA

430

CONTROL FOCUSING OF THE CAMERA BASED ON THE TARGET DEPTH TO IMAGE THE TARGET OBJECT

FIG. 4

FIG. 5A

FIG. 5B

P8

P7

P6

P5

P4

P3

P2

P1

140

FIG. 6A

CONTINUOUS DEPTH PLANE OF FOCUS

140

FIG. 6B

700

710

THE USER USES HMD WITH
SEE-THROUGH FUNCTION

720

APPLICATION OR DEFAULT
OS

730

SEE-THROUGH
FUNCTION
IS REQUIRED? — NO → 740 BACKGROUND AUTOFOCUS
MAY OPERATE

YES

750

ENABLE SEE-THROUGH
CAMERA

760

ENABLE AUTOFOCUS? — NO → 770 FIXED FOCUS

YES

780

ENABLE AUTOFOCUS
HARDWARE AND SOFTWARE

790

CAMERA FOCUS:
1. OBJECT GAZED BY USER
2. GUIDE USER TO GAZE ANOTHER OBJECT
3. REDICT AN OBJECT USER IS TO GAZE

FIG. 7

FIG. 8A

FIG. 8B

900↘

OBJECT
DETERMINATION ⟋ 910
MODULE

DEPTH
DETERMINATION ⟋ 920
MODULE

FOCUS CONTROL ⟋ 930
MODULE

FIG. 9

1000↘

PROCESSING UNIT ⟍ 1010

MEMORY ⟍ 1020
1025

PROGRAM
PRODUCT

STORAGE DEVICE ⟍ 1030

COMMUNICATION ⟍ 1040
UNIT

INPUT DEVICE ⟍ 1050

OUTPUT DEVICE ⟍ 1060

FIG. 10

## INTERNATIONAL SEARCH REPORT

| International application No. |
|---|
| **PCT/CN2024/116148** |

| A. | CLASSIFICATION OF SUBJECT MATTER |
|---|---|

H04N 23/67(2023.01)i

According to International Patent Classification (IPC) or to both national classification and IPC

| B. | FIELDS SEARCHED |
|---|---|

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI: 变焦, 对焦, 对象, 关注, 混合现实, 聚焦, 目标, 摄像, 深度, 相机, 兴趣, 虚拟现实, 增强现实, 注视, AR, MR, VR, focus, object, target, depth, zoom

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112507799 A (HUANXIE TECHNOLOGY (WUHAN) CO., LTD.) 16 March 2021 (2021-03-16)<br>description, paragraphs 255-322 | 1, 6-8, 10-14 |
| Y | CN 112507799 A (HUANXIE TECHNOLOGY (WUHAN) CO., LTD.) 16 March 2021 (2021-03-16)<br>description, paragraphs 255-322 | 2-5, 9 |
| Y | CN 113325947 A (BEIJING 7INVENSUN TECHNOLOGY CO., LTD.) 31 August 2021 (2021-08-31)<br>description, paragraphs 116-118 | 2-5, 9 |
| A | CN 115484383 A (HUAWEI TECHNOLOGIES CO., LTD.) 16 December 2022 (2022-12-16)<br>entire document | 1-14 |
| A | US 10567641 B1 (RUECKNER DEVON) 18 February 2020 (2020-02-18)<br>entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 November 2024** | **30 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/116148**

| Patent document cited in search report | | | Publication date (day/month/year) | Patent family member(s) | | | Publication date (day/month/year) |
|---|---|---|---|---|---|---|---|
| CN | 112507799 | A | 16 March 2021 | None | | | |
| CN | 113325947 | A | 31 August 2021 | None | | | |
| CN | 115484383 | A | 16 December 2022 | None | | | |
| US | 10567641 | B1 | 18 February 2020 | US | 10666856 | B1 | 26 May 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023112237799